# EUROPEAN PATENT SPECIFICATION

(11) **EP 3 289 728 B1**
(45) Date of publication and mention of the grant of the patent: **28.07.2021**
(21) Application number: 16802473.5
(22) Date of filing: 24.05.2016
(51) Int. Cl.: H04L 12/24, H04L 12/751

(54) **DISTRIBUTION OF INTERNAL ROUTES FOR VIRTUAL NETWORKING**
VERTEILUNG VON INTERNEN ROUTEN ZUR VIRTUELLEN VERNETZUNG
RÉPARTITION DE ROUTES INTERNES POUR UN RÉSEAUTAGE VIRTUEL

(30) Priority: 02.06.2015 US 201514728821
(43) Date of publication of application: 07.03.2018
(73) Proprietor: Huawei Technologies Co., Ltd., Longgang District Shenzhen, Guangdong 518129 (CN)
(72) Inventor: LI, Renwei, Shenzhen, Guangdong 518129 (CN); ZHAO, Katherine, Shenzhen, Guangdong (CN); HAN, Lin, San Jose, California 95129 (US)
(74) Representative: Kreuz, Georg Maria
(86) International application number: PCT/CN2016/083148
(87) International publication number: WO 2016/192550

(56) References cited:
- CN-A- 104 202 264
- CN-A- 104 392 175
- US-A1- 2013 114 465
- US-A1- 2013 219 384
- US-A1- 2015 009 992

## Description

### BACKGROUND

Network customers, sometimes referred to as tenants, often employ software systems operating on virtualized resources, such as virtual machines (VMs) in a cloud environment. Virtualization of resources in a cloud environment allows virtualized portions of physical hardware to be allocated and de-allocated between tenants dynamically based on demand. Virtualization in a cloud environment allows limited and expensive hardware resources to be shared between tenants, resulting in substantially complete utilization of resources. Such virtualization further prevents over allocation of resources to a particular tenant at a particular time and prevents resulting idleness of the over-allocated resources. Dynamic allocation of virtual resources may be referred to as provisioning. The use of virtual machines further allows tenants software systems to be seamlessly moved between servers and even between different geographic locations.

US Patent Application (US 2015/0009992 A1) discloses a method for bridging communication between a plurality of Virtual extensible Local Area Network (VXLAN) networks, where the method comprises joining the VXLAN networks, obtaining a forwarding entry table that associates a plurality of endpoints with a plurality of VXLAN tunnel endpoints (VTEPs) within the VXLAN networks, receiving a VXLAN encapsulated data packet from one of the VXLAN networks, and transmitting the VXLAN encapsulated data packet using the forwarding entry table to a different VXLAN network.

### SUMMARY

The current invention is carried out as described in the appended claims.

In claim 1 the disclosure includes a method implemented in a network element (NE) configured to implement a cloud rendezvous point (CRP), the method comprising maintaining, at the CRP, a cloud switch point (CSP) database indicating a plurality of CSPs and indicating each virtual network attached to each CSP; receiving, from a first CSP, the register message indicating a first CSP network address and a first virtual network attached to the first CSP; and sending first report messages indicating the first CSP network address to each CSP in the CSP database attached to the first virtual network.

In claim 9 the disclosure includes a method implemented in an NE configured to implement a local CSP, the method comprising: sending, to a CRP, a register message indicating a network address of the local CSP and an indication of each virtual network attached to the local CSP; receiving from the CRP a report message indicating a remote network address of each remote CSP attached one or more common virtual networks with the local CSP; and transmitting one or more route messages to the remote CSPs at the remote network addresses to indicate local virtual routing information of portions of the common virtual networks attached to the local CSP.

In claim 14 the disclosure includes an NE configured to implement a local CSP, the NE comprising a transmitter configured to transmit, to a CRP, a register message indicating a network address of the local CSP and an indication of a virtual network attached to the local CSP; a receiver configured to receive from the CRP a report message indicating a remote network address of each remote CSP attached to the virtual network; and a processor coupled to the transmitter and the receiver, the processor configured to cause the transmitter to transmit route messages to the remote CSPs at the remote network addresses to indicate local virtual routing information of local portions of the virtual network attached to the local CSP.

These and other features will be more clearly understood from the following detailed description taken in conjunction with the accompanying drawings and claims.

### BRIEF DESCRIPTION OF THE DRAWINGS

For a more complete understanding of this disclosure, reference is now made to the following brief description, taken in connection with the accompanying drawings and detailed description, wherein like reference numerals represent like parts.
FIGS. 1A-1C are schematic diagrams of an embodiment of a physical network configured to implement geographically diverse virtual networks.
FIG. 2 is a schematic diagram of an embodiment of control plane network configured to operate on a physical network to distribute virtual network routing information.
FIG. 3 is a schematic diagram of an embodiment of an NE within a network.
FIG. 4 is a protocol diagram of an embodiment of a method of distribution of virtual network routing information.
FIG. 5 is a protocol diagram of an embodiment of a method of employing a Transmission Control Protocol (TCP) connection to support CSP registration with a CRP.
FIG. 6 is a protocol diagram of an embodiment of a method of employing a TCP connection to support distribution of virtual network routing information between CSPs.
FIGS. 7A-7B are schematic diagrams of an embodiment of CSPs routing tables before and after virtual network routing information distribution.
FIG. 8 is a flowchart of an embodiment of a method of CRP management of distribution of virtual network CSP attachments.
FIG. 9 is a flowchart of an embodiment of a method of CSP registration and virtual network routing information distribution.

### DETAILED DESCRIPTION

It should be understood at the outset that, although an illustrative implementation of one or more embodiments are provided below, the disclosed systems and/or methods may be implemented using any number of techniques, whether currently known or in existence. The disclosure should in no way be limited to the illustrative implementations, drawings, and techniques illustrated below, including the exemplary designs and implementations illustrated and described herein, but may be modified within the scope of the appended claims.

VMs and/or other virtual resources can be linked together to form a virtual network, such as a virtual extensible network (VxN). As virtual resources are often moved between servers, between geographically distant data centers (DCs), and/or distinct hosting companies, maintaining connectivity between the virtual resources in the virtual network can be problematic. Connectivity issues may further arise in cases where virtual networks communicate across portions of a core network controlled by multiple service providers. For example, hosts and/or providers limit sharing of data with other hosts/providers for security reasons.

Disclosed herein is a unified CloudCasting Control (CCC) protocol and architecture to support management and distribution of virtual network information between DCs across a core network. Each portion of a virtual network (e.g. operating in a single DC) attaches to a local CSP. The CSP is reachable at a network address, such as an internet protocol (IP) address. The local transmits a registration message to a CRP. The registration message comprises the CSP's network address and a list of all virtual networks to which the CSP is attached, for example by unique virtual network numbers within a CCC domain, unique virtual network names, or both. The CRP maintains a CSP database that indicates all virtual networks in the CCC domain(s), all CSPs in the CCC domain(s), and data indicating all attachments between each virtual network and the CSPs. Periodically and/or upon receipt of a registration message, the CRP sends reports to the CSPs. A report indicates the network addresses of all CSPs attached to a specified virtual network. The report for a specified virtual network may only be sent to CSPs attached to the specified network. The CSPs use the data from the report to directly connect with other CSPs that are attached to the same virtual network(s), for example via TCP connections/sessions. The CSPs then share their local virtual routing information with other CSPs attached to the same virtual network(s) so that the local systems can initiate/maintain data plane communications between the separate portions of virtual network(s) across the core network, for example by employing CSPs as gateways, Virtual Extensible Local Area Network (VXLAN) endpoints, etc.

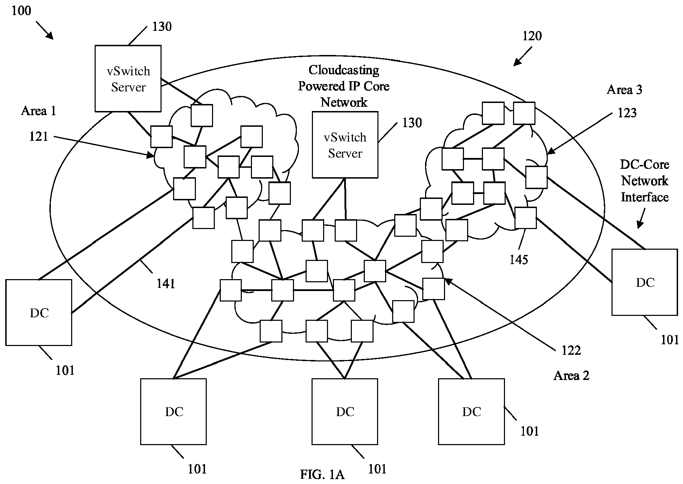

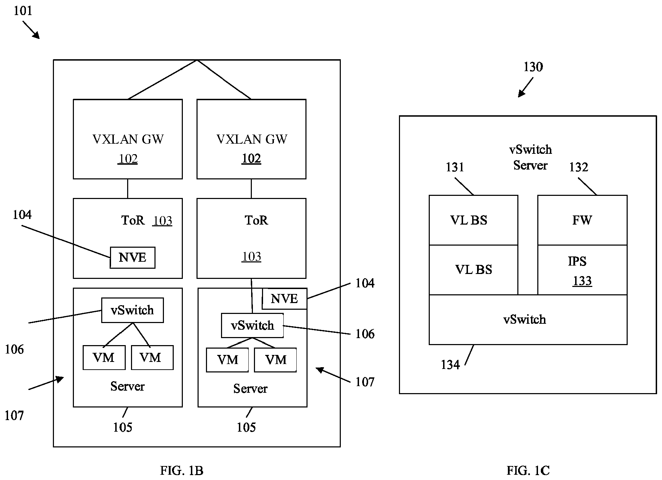

FIGS. 1A-1C are schematic diagrams of an embodiment of a physical network 100 configured to implement geographically diverse virtual networks. Referring to FIG. 1A, physical network 100 may comprises DCs 101 for operating virtual resources provisioned for a plurality of virtual networks. The DCs 101 are communicatively coupled via a core network 120. The core network 120 is partitioned in a plurality of areas, area 121, area 122, and area 3 123. The areas 121, 122, and 123 each comprise a plurality of physical nodes 145 coupled by physical links 141. Communications between the virtual networks are facilitated by virtual switch (vSwitch) servers 130 positioned in the core networks areas 121, 122, and/or 123.

Core network 120 provides routing and other telecommunication services for the DCs 101. Core network 120 may comprise high speed electrical, optical, elector-optical or other components to direct communications between the DCs 101. The core network 120 may be an IP based network and may employ an IP address system to locate source and destination nodes for communications (e.g. IP version four (IPv4) or IP version six (IPv6)). The core network 120 is divided into area 121, area 122, and area 123. Although three areas are depicted, it should be noted that any number of areas may be employed. Each area is operated by a different service provider and comprises a domain. Accordingly, information sharing may be controlled between areas for security reasons. Each area comprises nodes 145 coupled by links 141. The nodes 145 may be any optical, electrical, and/or elecro-optical component configured to receive, process, store, route, and/or forward data packets and/or otherwise create or modify a communication signal for transmission across the network. For example, nodes 145 may comprise routers, switches, hubs, gateways, electro-optical converters, and/or other data communication device. Links 141 may be any electrical and/or optical medium configured to propagate signals between the nodes. For example, links 141 may comprise optical fiber, co-axial cable, telephone wires, Ethernet cables or any other transmission medium. In some embodiments, links 141 may also comprise radio based links for wireless communication between nodes such as nodes 145.

DCs 101 are any facilities for housing computer systems, power systems, storage systems, transmission systems, and/or any other telecommunication systems for processing and/or serving data to end users. DCs 101 may comprise servers, switches, routers, gateways, data storage systems, etc. DCs 101 may be geographically diverse for one another (e.g., positioned in different cities, states, countries, etc.) and couple across the core network 120 via one or more DC-Core network interfaces. Each DC 101 may maintain a local routing and/or security domain and may operate portions of one or more virtual networks such as VxNs and associated virtual resources, such as VMs. Referring to FIG. IB, a DC 101 comprises a plurality of servers 105, which may be positioned in a rack. A rack may comprise a top of rack (ToR) switch 103 configured to route and/or switch transmissions between servers 105 in the rack The DC 101 may further comprise end of row (EoR) switches configured to communicate with the ToR switches 103 and switch and/or route packets between rows of racks and the edges of the DC 101. The servers 105 may provide hardware resources for and/or implement any number of virtual resources for a virtual network.

The virtual network may comprise VMs 107 for processing, storing, and/or managing data for tenant applications. VMs 107 may be located by virtual Media Access Control (MAC) and/or virtual IP addresses. The virtual network may comprise vSwitches 106 configured to route packets to and from VMs 107 based on virtual IP and/or virtual MAC addresses. The vSwitches 106 may also maintain an awareness of a correlation between the virtual IP and virtual MAC addresses and the physical IP and MAC addresses of the servers 105 operating the VMs 107 at a specified time. The vSwitches 106 may be located on the servers 105. The vSwitches 106 may communicate with each other via VXLAN gateways (GWs) 102. The VXLAN GWs 102 may also maintain an awareness of the correlation between the virtual IP and virtual MAC addresses of the VMs 107 and the physical IP and MAC addresses of the servers 105 operating the VMs 107 at a specified time. For example, the vSwitches 106 may broadcast packets over an associated virtual network via Open Systems Interconnection (OSI) layer two protocols (e.g., MAC routing), and VXLAN GWs 102 may convert OSI layer two packets into OSI layer three packets (e.g., IP packets) for direct transmission to other VXLAN GWs 102 in the same or different DC 101, thus extending the layer two network over the layer three IP network. The VXLAN GWs 102 may be located in the ToRs 103, in the EoRs, or in any other network node. The virtual networks may also comprise network virtual edges (NVEs) 104 configured to act as an edge device for each local portion of an associated virtual network. The NVEs 104 may be located in a server 105, in a ToR 103, or any in other location between the vSwitch 106 and the VXLAN GW 102. The NVEs 104 may perform packet translation functions (e.g. layer 2 to layer 3), packet forwarding functions, security functions, and/or any other functions of a network edge device.

vSwitch servers 130 may operate in different areas 121, 122, and/or 123 of the core network 120 and may communicate with the virtual network components at the DCs 101. Referring to FIG. 1C, the vSwitch servers 130 comprise a vSwitch 134, which may be substantially similar to a vSwitch 106, and may perform a similar function to vSwitchs 106 in the core network 120. The vSwitch servers 130 further comprise one or more virtual load balance service (VL BS) 131 components, which is configured to perform communication load balancing and/or other network communication load optimization by rerouting traffic flows in the core network 120 from over utilized links/node to underutilized links/nodes, etc. The vSwitch servers 130 further comprise a firewall (FW) 132 which is configured to perform network security and for traffic flows traversing the core network 120, for example by blocking unauthorized communications, dropping packets, etc. The vSwitch servers 130 further comprise an Intrusion Prevention System (IPS) 133, which may also be referred to as an intrusion detection and prevention system (IDPS), and is configured to monitor network communications for malicious activity, for example denial of service (DNS) attacks, and interact with other network components to mitigate damage resulting from such malicious activity (e.g., by contacting a network management system, reconfiguring the FW 132, etc).

As discussed in more detail below, the vSwitch servers 130 in the core network may be configured to communicate with the vSwitches 106, NVEs 104, and/or VXLAN GWs 102. Specifically, the vSwitch servers 130 may act as rendezvous points for maintaining database tables for maintaining IP address information of DCs 101 and indications of virtual networks operating at each DC 101 at a specified time. The vSwitch servers 130 may report the IP address information and virtual network indications to the DCs 101 periodically, upon request, and/or upon the occurrence of an event to allow the DCs 101 to exchange virtual network routing information.

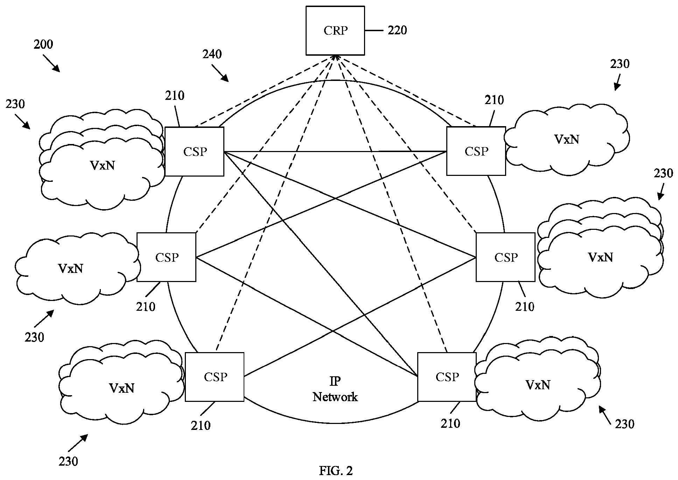

FIG. 2 is a schematic diagram of an embodiment of control plane network 200 configured to operate on a physical network, such as network 100, to distribute virtual network routing information. Network 200 comprises virtualized components that operate on the physical network as discussed more fully below. Network 200 comprises a plurality of VxNs 230 attached to a plurality of CSPs 210. The CSPs 210 are configured to communicate via connections across an IP network 240, such as core network 120. Network 200 further comprises a CRP 220 configured to perform control signaling with the CSPs 210 as indicated in FIG. 2 by dashed lines.

VxNs 230 may comprise VMs, vSwitches, NVEs, such as VMs 107, vSwitches 106, and NVEs 104, respectively, and/or any other component typically found in a virtual network. VxNs 230 operate in a DC, such as DC 101. A DC may operate any number of VxNs 230 and/or any number of portions of VxNs 230. For example, a first VxN 230 may be distributed over all DCs 101, a second VxN 230 may be distributed over two DCs, a third VxN 230 may be contained in a single DC, etc. A VxN 230 may be described in terms of virtual network routing information, such as virtual IP addresses and virtual MAC addresses of the virtual resources in the VxN 230.

Each local portion of a VxN 230 at a DC attaches to a CSP 210. A CSP 210 may operate on a server or a ToR, such as server 105 or TOR 103, respectively, an EoR switch or any other physical NE or virtual component in a DC, such as DC 101. The CSPs 210 connect to both virtual networks (e.g., VxNs 230) and an IP backbone/switch fabric. The CSPs 210 are configured to store virtual IP addresses, virtual MAC addresses, VxN numbers/identifiers (IDs), VxN names, and/or other VxN information of attached VxNs 230 as virtual network routing information. Virtual network routing information may also comprise network routes, route types, protocol encapsulation types, etc. The CSPs 210 are further configured to communicate with the CRP 220 to obtain network addresses (e.g., IP addresses) of other CSPs 210 attached to any common VxN 230. The CSPs 210 may then exchange virtual network routing information over the IP network 240 to allow virtual resources in the VxN 230 but residing in different DCs to communicate. The CSPs 210 may be configured to act as a user's/tenants access point, act as an interconnection point between VxNs 230 in different clouds (e.g. DCs), act as a gateway between a VxN 230 and a physical network, and participate in CCC based control and data forwarding.

The CRP 220 is configured to communicate with the CSPs 210 and maintain a CSP database listing for each CSPs 210 network address (e.g., IPv4/IPv6 address) and listing all VxNs 230 attached to each CSP 210 (e.g., by individual VxN numbers, VxN ranges, etc). A CRP 220 may reside in a vSwitch server in an area of a core network, such as vSwitch server 130. It should be noted that, while one CRP 220 is depicted in network 200, multiple CRPs 220 may be employed, for example one CRP 220 per network area 121, 122, and/or 123, a cluster of CRPs, a hierarchy of CRPs, etc. The CRP 220 may be configured to enforce CSP 210 authentication and manage CCC protocol and/or CCC auto-discovery. For example, the CRP 220 may receive a register message from a CSP 210 indicating its network address and any VxNs 230 attached to the CSP 210. The VxNs 230 may be indicated by a VxN number that uniquely identifies the VxN 230 in a CCC domain (e.g. a domain controlled by a single CRP 220 via a CCC protocol) and/or a VxN name which is globally unique to the the VxN 230. In the case of multiple CCC domains/multiple CRPs 220, the VxN number and VxN name in combination uniquely identify the VxN 230. The VxN name may be represented as a complete name or a partial name and a wild card (*). The VxN numbers may be represented by lists of individual VxN numbers, VxN number ranges, cloud names, cloud identifiers, IP cloud tags, etc. The CRP 220 may transmit report messages to the CSPs 210 in order to indicate to each CSP 210 the network address of other CSPs 210 attached to common VxNs 230. The determination of common VxN may be made by VxN number matching, VxN name matching, partial VxN name matching, or combinations thereof. VxN matching may be completed by comparing a registering CSP's interest in a particular VxNs 230 with the CSP's 210 other attached VxN 230 numbers, with the attached VxNs 230 of other CSPs 210, or combinations thereof. Upon receipt of the report message(s), the CSPs 210 may connect directly the other relevant CSPs 210, depicted as solid lines in network 200, to exchange virtual network routing information. It should be noted that the CRP 220 may not send a report to a specified CSP 210 with information regarding a VxN 230 unless the VxN 230 is attached to the specified CSP 210. Accordingly, a CSP 210 may not receive network addresses or virtual network routing information associated with any VxN 230 which is not attached to that CSP 210. The CSPs 210 and/or CRPs 220 may communicate over the IP network 240 via TCP connections/sessions or any other direct communication protocol. The CRP 220 may send reports to the CSPs 210 periodically, upon receipt of a registration message from a CSP 210 regarding a commonly attached VxN 230, and/or upon occurrence of a specified event. The CSPs 210 may exchange virtual network routing information with other CSPs 210, periodically, upon received a report from the CRP(s) 220, upon a change in local virtual network routing information, and/or upon occurrence of a specified event. Such exchanges may occur via TCP Post messages. The exchange of the virtual network routing information allows each VM and/or NE to communicate with any other VM or NE in the same VxN 230.

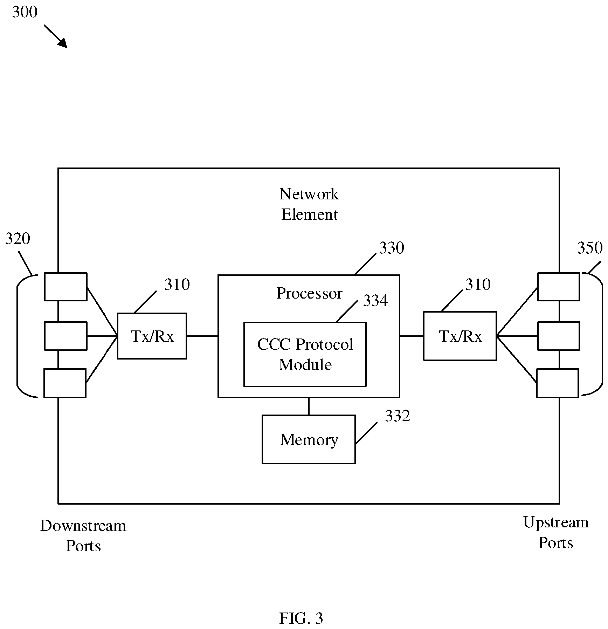

FIG. 3 is a schematic diagram of an embodiment of an NE 300 within a network, such as network 100 or 200. For example, NE 300 may act as a server 107, a ToR 103, a vSwitch server 130, a node 145, and/or any other node in network 100. NE 300 may also be any component configured to implement a CSP 210, a CRP 220, and/or any virtual resource of a VxN 230. NE 300 may be implemented in a single node or the functionality of NE 300 may be implemented in a plurality of nodes. One skilled in the art will recognize that the term NE encompasses a broad range of devices of which NE 300 is merely an example. NE 300 is included for purposes of clarity of discussion, but is in no way meant to limit the application of the present disclosure to a particular NE embodiment or class of NE embodiments. At least some of the features/methods described in the disclosure are implemented in a network apparatus or component such as an NE 300. For instance, the features/methods in the disclosure may be implemented using hardware, firmware, and/or software installed to run on hardware. The NE 300 is any device that transports frames through a network, e.g., a switch, router, bridge, server, a client, etc. As shown in FIG. 3, the NE 300 may comprise transceivers (Tx/Rx) 310, which are transmitters, receivers, or combinations thereof. A Tx/Rx 310 is coupled to a plurality of downstream ports 320 (e.g. downstream interfaces) for transmitting and/or receiving frames from other nodes and a Tx/Rx 310 coupled to a plurality of upstream ports 350 (e.g. upstream interfaces) for transmitting and/or receiving frames from other nodes, respectively. A processor 330 is coupled to the Tx/Rxs 310 to process the frames and/or determine which nodes to send frames to. The processor 330 may comprise one or more multi-core processors and/or memory 332 devices, which function as data stores, buffers, Random Access Memory (RAM), Read Only Memory (ROM), etc. Processor 330 may be implemented as a general processor or may be part of one or more application specific integrated circuits (ASICs) and/or digital signal processors (DSPs). Processor 330 comprises a CCC protocol module 334, which implements at least some of the methods discussed herein such as method 400, 500, 600, 800 and/or 900. In an alternative embodiment, the CCC protocol module 334 is implemented as instructions stored in memory 332, which are executed by processor 330, or implemented in part in the processor 330 and in part in the memory 332, for example a computer program product stored in a non-transitory memory that comprises instructions that are implemented by the processor 330. In another alternative embodiment, the CCC protocol module 334 is implemented on separate NEs. The downstream ports 320 and/or upstream ports 350 may contain electrical and/or optical transmitting and/or receiving components.

It is understood that by programming and/or loading executable instructions onto the NE 300, at least one of the processor 330, CCC protocol module 334, Tx/Rxs 310, memory 332, downstream ports 320, and/or upstream ports 350 are changed, transforming the NE 300 in part into a particular machine or apparatus, e.g., a multi-core forwarding architecture, having the novel functionality taught by the present disclosure. It is fundamental to the electrical engineering and software engineering arts that functionality that can be implemented by loading executable software into a computer can be converted to a hardware implementation by well-known design rules. Decisions between implementing a concept in software versus hardware typically hinge on considerations of stability of the design and numbers of units to be produced rather than any issues involved in translating from the software domain to the hardware domain. Generally, a design that is still subject to frequent change may be preferred to be implemented in software, because re-spinning a hardware implementation is more expensive than re-spinning a software design. Generally, a design that is stable that will be produced in large volume may be preferred to be implemented in hardware, for example in an ASIC, because for large production runs the hardware implementation may be less expensive than the software implementation. Often a design is developed and tested in a software form and later transformed, by well-known design rules, to an equivalent hardware implementation in an application specific integrated circuit that hardwires the instructions of the software. In the same manner as a machine controlled by a new ASIC is a particular machine or apparatus, likewise a computer that has been programmed and/or loaded with executable instructions may be viewed as a particular machine or apparatus.

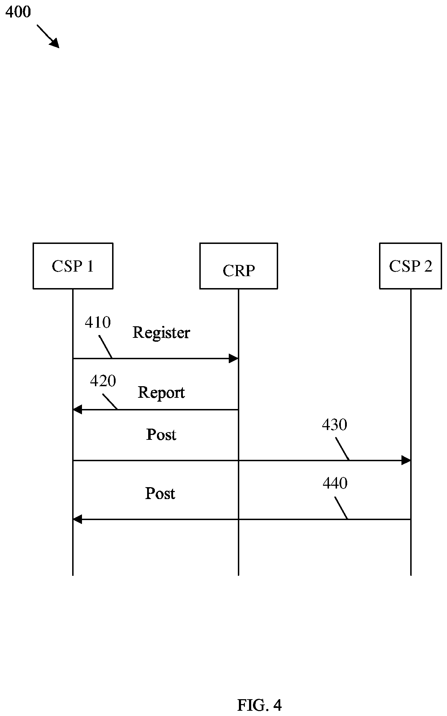

FIG. 4 is a protocol diagram of an embodiment of method 400 of distribution of virtual network routing information. Method 400 may be implemented by a first CSP (CSP 1), and a second CSP (CSP 2), which may be substantially similar to CSPs 210, and by a CRP, which may be substantially similar to CRP 220. Method 400 may be initiated when CSP 1 powers on or otherwise attaches to a new virtual network such as VxN 230. At step 410, CSP 1 transmits a register message to the CRP. The register message may comprise CSP 1's network address, such as an IP address, as well as an indication of each VxN attached to CSP 1, for example by indicating a VxN name and/or number. In some embodiments, the register message may also comprise an ID for the CSP 1 (e.g. a string or a number) and/or an indication of any other virtual network CSP 1 is interested in. The CRP may save the data from the register message of step 410 into a CSP database. At step 420, the CRP may respond to CSP 1 by transmitting a report message. The report message of step 420 may include a listing of network addresses for each CSP attached a common VxN with CSP 1 as well as VxN names and/or numbers of the associated VxNs. For example, the register message may indicate that CSP 1 is attached to a first VxN, and the report message may indicate that CSP 2 is also attached to the first VxN along with CSP 2's network/IP address. In an alternate embodiment, the CRP may simultaneously send a report message to CSP 2 indicating the network address of CSP 1 and indicating that CSP 1 shares a common VxN with CSP 2. At step 430, CSP 1 transmits a post message to CSP 2 at the network address received from CRP at step 420. The post message may comprise virtual network routing information for portions of the common VxN (e.g. the first VxN) located at CSP 1. At step 440, CSP 2 may also respond to CSP 1 with a post message indicating virtual network routing information for portions of the common VxN (e.g. the first VxN) located at CSP 2. By exchanging virtual network routing information for the common VxN and network addresses of the attached CSPs, each virtual resource can communicate with any other virtual resource in the VxN (e.g. via unicast, multicast, etc.) by forwarding a packet to the virtual address of the destination virtual resource at the CSP attached to the portion of the virtual network that contains the destination virtual resource. Network encapsulation may also be employed to allow messages in other protocols (e.g. VXLAN, Network Virtualization using Generic Routing Encapsulation (NVGRE), Multiprotocol Label Switching (MPLS), etc.) to be forwarded by CSP address and virtual resource address.

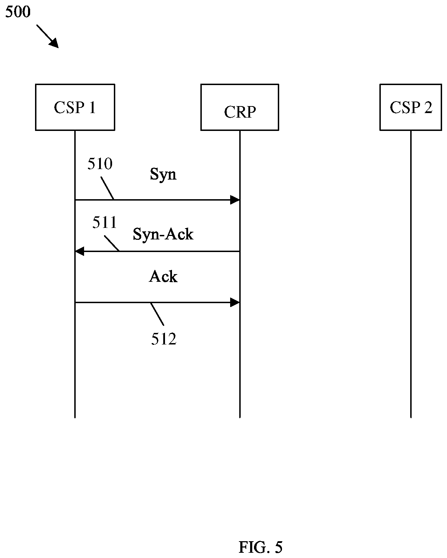

FIG. 5 is a protocol diagram of an embodiment of method 500 of employing a TCP connection to support CSP registration with a CRP. Method 500 may be implemented by CSP CSP 1 and a CRP, which may be substantially similar to CSPs 210 and CRP 220, respectively. Method 500 may be implemented to prepare for transmission of a register message, such as the register message of step 410, via a TCP session. When implemented between a CSP and a CRP, the session may be referred to as a CSP-CRP session. Method 500 may be initiated when CSP 1 powers on or otherwise attaches to a new virtual network such as VxN 230. At step 510, CSP 1 transmits a synchronization (SYN) message to the CRP to indicate a request for a TCP connection. At step 511, the CRP may respond with a SYN- acknowledgement (ACK) message indicating the CRP is prepared to establish the TCP connection. At step 512, the CSP replies with an ACK indicating that the CSP 1 received the SYN-ACK and indicating that the TCP connection/session is established. Upon completion of step 512, CSP 1 may forward the register message of step 410 to the CRP. It should be noted that the CSP may be considered the TCP connection initiator as the CSP sends the SYN message to the CRP. The CRP may take the role of connection receiver. Further, the CSP and the CRP may each authenticate the identity and location of the other (e.g. peer) device. Such authentication may be manual or may employ other security protocols such as Remote Authentication Dial In User Service (RADIUS), extended RADIUS protocol (DIAMETER), etc. Security may also be managed by employing message digest algorithm (MD5) signatures and/or other IP security (IPsec) schema.

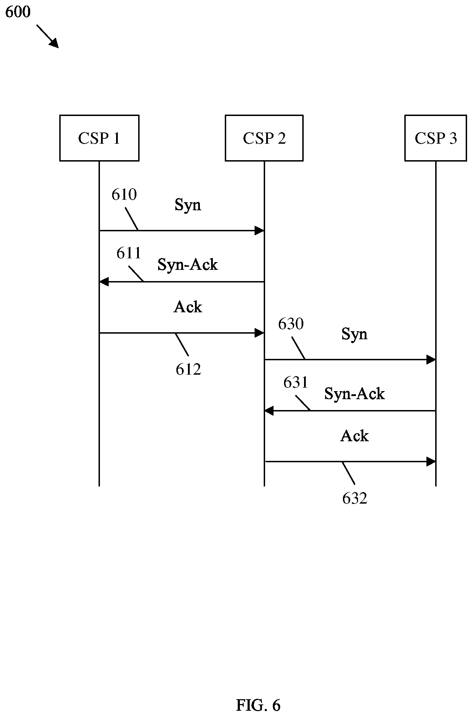

FIG. 6 is a protocol diagram of an embodiment of method 600 of employing a TCP connection to support distribution of virtual network routing information between CSPs. Method 600 may be implemented by a CSP 1, a CSP 2, and a third CSP (CSP 3), which may be substantially similar to CSPs 210. Method 600 may be initiated when CSP 1, CSP 2, and/or CSP 3 receives a report message from a CRP. The report message to CSP 1 indicates that CSP 1 is attached to a first VxN (VxN-10) and a second VxN (VxN-20). The report to CSP 1 also indicates the network address of CSP 2 and that CSP 2 is also attached to VxN-10 (e.g., a common virtual network). The report to CSP 2 indicates that CSP 1 is attached to VxN-10, CSP 2 is attached to VxN-10 and a third VxN (VxN-30), and that CSP 3 is also attached to VxN-30. The report to CSP 2 further indicates the network addresses of both CSP1 and CSP 3. Finally, the report to CSP 3 indicates that CSP 2 and CSP 3 are both attached to VxN-30 and provides the network address of CSP 2. Accordingly, CSP 3 receives no information regarding VxN-10 or VxN- 20 as CSP 3 is not attached to those virtual networks (e.g., CSP 1 receives no information regarding VxN-30, etc). Upon receiving the reports CSP 1 initiates a TCP session with CSP 2 by transmitting a SYN at step 610, receiving a SYN-ACK at step 611, and replying with an ACK at step 612, in a similar manner to steps 510-512. Once the TCP session is established between CSP 1 and CSP 2, CSP 1 and CSP 2 may exchange virtual routing information related to VxN-10 via TCP post (POST) messages. CSP 2 may also establish a TCP session with CSP 3 by transmitting a SYN at step 630, receiving a SYN-ACK at step 631, and replying with an ACK at step 632, in a similar manner to steps 610-612. Once the TCP session is established between CSP 2 and CSP 3, CSP 2 and CSP 3 may exchange virtual routing information related to VxN-30 via TCP post (POST) messages. CSP 3 may not establish a TCP session/connection with CSP 1 as CPS 1 and CSP 3 share no common virtual networks and therefore have no relevant virtual routing information to exchange. When implemented between two CSPs, the TCP session may be referred to as a CSP-CSP session.

It should be noted that each CSP may attempt to initiate a TCP connection with other CSPs with common virtual networks. Accordingly, the CSPs may negotiate the roles of connection initiator and connection receiver, for example based on which CSP sent the first post message. Further, the post message may be sent to a specified port, for example to port 35358 or any other port designated for such purpose. It should also be noted that a CCC session state may be maintained via TCP by employing methods 500 and 600. The CCC session state may be maintained between the CSPs and/or the CRP by transmitting keep-alive messages across the TCP connections or by sending periodic post, register, and/or report messages. It should also be noted that, while method 600 is applied to three CSPs with three VxNs, any number of CSPs and any number/configuration of VxNs may employ method 600 to distribute virtual routing information for common VxNs.

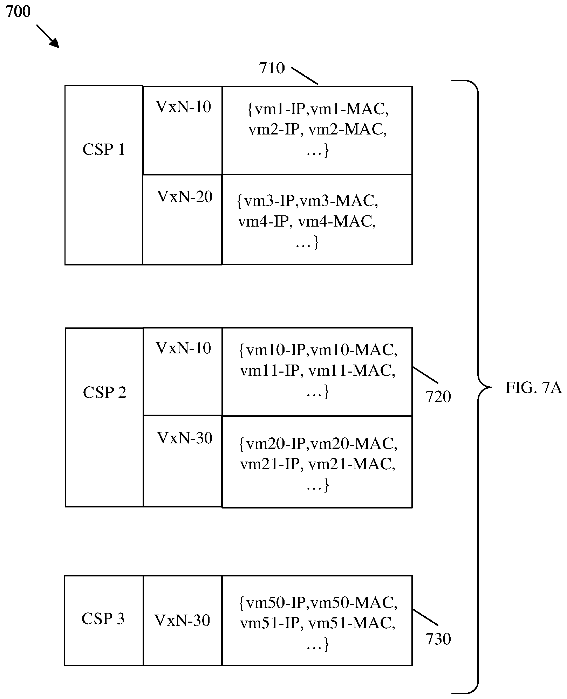

FIGS. 7A-7B are schematic diagrams of an embodiment of CSPs routing tables 700 before and after virtual network routing information distribution, for example as a result of methods 400, 500, 600, 800, and/or 900. In other words, FIGS. 7A-7B illustrate routing tables 700 at different times (e.g. a first time and a second time). Referring to FIG. 7A, the routing tables 700 comprise a routing table 710 on a CSP 1, a routing table 720 on a CSP 2, and a routing table 730 on a CSP 3, wherein CSP 1, CSP 2, and CSP 3 may each be substantially similar to a CSP 210. Routing tables 710, 720, and 730 depict the virtual network routing information known to CSP 1, CSP 2, and CSP 3, respectively, at a first specified time, for example prior to receiving a report message from a CRP. The CSPs are attached to VxN-10, VxN-20, and VxN-30, which may be substantially similar to VxN 230. As shown in routing table 710, CSP 1 is attached to VxN-10 and VxN-20. The portion of VxN-10 attached to CSP 1 comprises a first VM (vm-1) with a first virtual IP address (vm1-IP) and a virtual MAC address (vm1-MAC) and a second VM (vm-2) with virtual addresses vm2-IP and vm2-MAC. Further, the portion of VxN-20 attached to CSP 1 comprises a third VM (vm-3) and a fourth VM (vm-4) with virtual addresses vm3-IP/vm3-MAC and vm4-IP/vm4-MAC, respectively. As shown in routing table 720, CSP 2 is attached to VxN-10 and VxN-30. The portion of VxN-10 attached to CSP 2 comprises a tenth VM (vm-10) and eleventh VM (vm-11) with virtual addresses of vm10-IP/vm10-MAC and vm11-IP/vm11-MAC, respectively. The portion of VxN-30 attached to CSP 2 comprises a twentieth VM (vm-20) and a twenty first VM (vm-21) with virtual addresses vm20-IP/vm20-MAC and vm21-IP/vm21-MAC, respectively. As shown in routing table 730, CSP 3 is attached to VxN-30. The portion of VxN-30 attached to CSP 3 comprises a fiftieth VM (vm-50) and a fifty first VM (vm-51) with virtual addresses vm50-IP/vm50-MAC and vm51-IP/vm51-MAC, respectively. As seen in FIG. 7A, CSP 1 and CSP 2 are attached to common network VxN-10; and CSP 2 and CSP 3 are attached to common network VxN-30. However, at the initial time, CSP 1 is unaware of the virtual resources attached to CSP 2 in common VxN-10 and vice versa. Likewise, CSP 2 is unaware of the virtual resources attached to CSP 3 in common VxN-30 and vice versa.

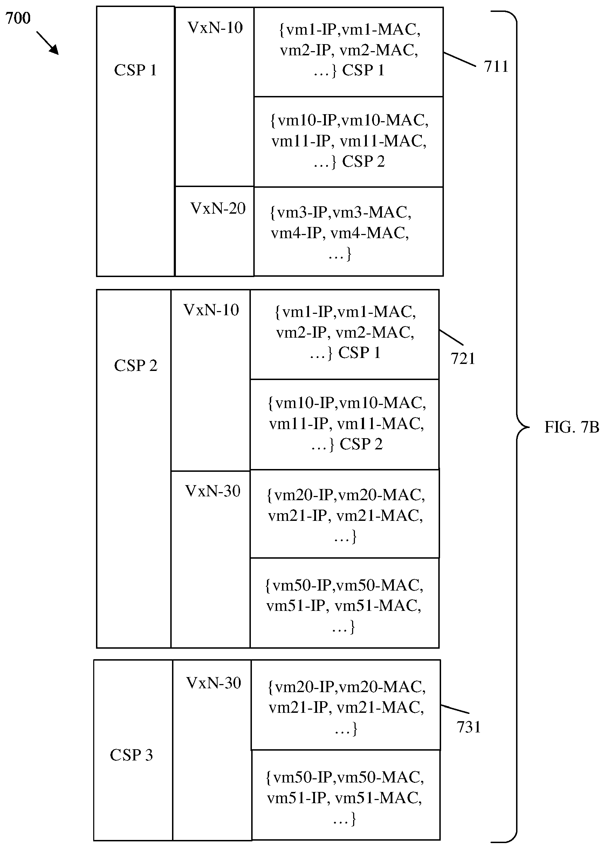

Referring to FIG. 7B, routing tables 711, 721, and 731 depict the virtual network routing information known to CSP 1, CSP 2, and CSP 3, respectively, at a second specified time, for example after virtual network routing information distribution. Specifically, CSP 1 has received virtual network routing information indicating the portions of common virtual network VxN-10 attached to CSP 2 (e.g. vm10-IP/vm10-MAC, etc.) and vice versa (e.g. vm1-IP/vm1-MAC, etc.) Further, CSP 2 has received virtual network routing information indicating the portions of common virtual network VxN-30 attached to CSP 3 (e.g. vm50-IP/vm50-MAC, etc.) and vice versa (e.g. vm20-IP/vm20-MAC, etc.). Accordingly, each VM in any virtual network can communicate with any destination VM in the same virtual network (e.g. or any virtual network, depending on the embodiment) by specifying the destination VM network address and the network address of the CSP to which the destination VM is attached. As shown by routing tables 700, CSPs may not exchange virtual network routing information for virtual networks not shared by both CSPs (e.g. CSP 1 received no data regarding VxN-30 because VxN-30 is not attached to CSP 1). In other words, there may be no full mesh of CSPs in a CCC domain.

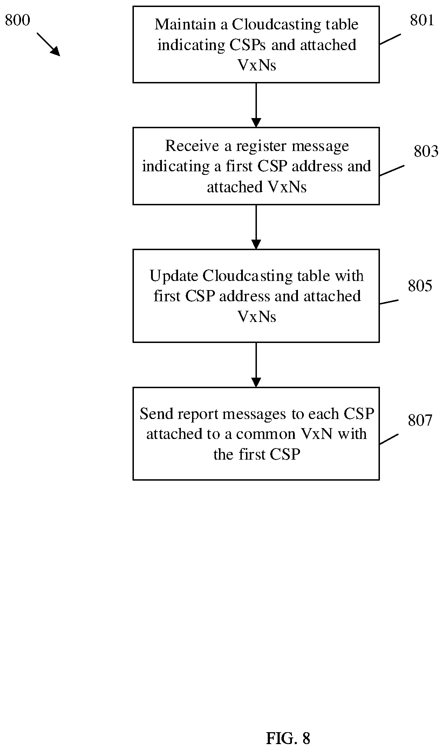

FIG. 8 is a flowchart of an embodiment of a method 800 of CRP management of distribution of virtual network CSP attachments. Method 800 may be implemented by a CRP, such as CRP 220 when a CCC protocol enabled network, such as network 100, is operational. At step 801, a cloudcasting database is maintained at a CRP indicating all known CSPs and all virtual networks (e.g. VxNs) attached to each CSP. At step 803, a register message is received from a first CRP indicating the CRPs network address (e.g. physical network address) and an indication of all VxNs attached to the first CSP (e.g. by VxN name/number). The register message of step 803 is received when the first CSP powers on, when the first CSP attaches to a new VxN, periodically, and/or upon occurrence of some other condition. At step 805, the cloudcasting database is updated with the first CSPs network address and VxN attachment(s). At step 807, a report message is sent to each CSP attached to a common VxN with the first CSP, for example to indicate to such other CSPs that CSP 1 contains relevant VxN routing information and vice versa. The report message of step 807 may contain no direct virtual network routing information (e.g. VM IP or MAC addresses). The report message of step 807 may only indicate the network address of each CSP sharing a common virtual network with CSP 1 and an indication of the common virtual network(s) to support virtual network routing information distribution between the CSPs. It should be noted that in some embodiments, the CRP may transmit an acknowledgement to the first CSP with a value set to success or fail to indicate the status of the registration to the CSP. In other embodiments, the report message(s) may contain a route status code for each CSP/VxN. The route status code may be set to valid or invalid. Based on the route status code in a received report, a CSP may determine the success of an associated register message.

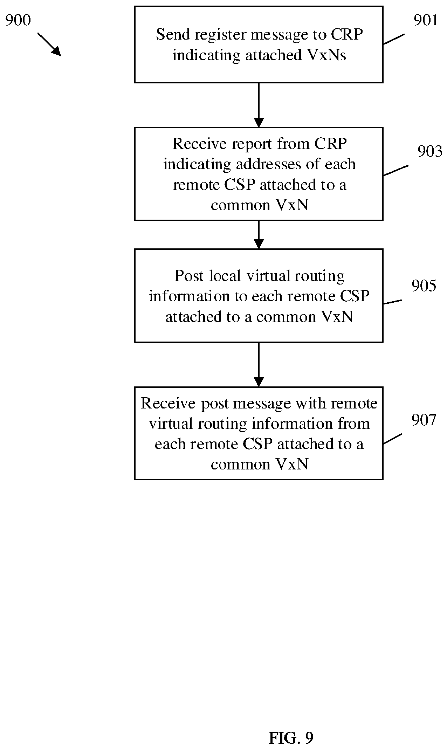

FIG. 9 is a flowchart of an embodiment of a method 900 of CSP registration and virtual network routing information distribution. Method 800 may be implemented by a CSP, such as a CSP 210 when the CSP powers on, attaches/unattaches from a virtual network, periodically, or upon receipt of a command. For clarity of discussion, the CSP implementing method 900 is referred to as a local CSP, while other CSPs (e.g. in remote DCs such as DCs 101) are referred to as remote CSPs. At step 901, a register message is sent from the local CSP to a CRP. The register message indicates the network address of the local CSP and indicates one or more virtual networks (e.g. VxNs) attached to the local CSP. At step 903, the local CSP receives a report message from the CRP. The report message indicates a network address for each remote CSP attached to any portion of a virtual network that is also attached to the local CSP. The report also indicates which common virtual network(s) are attached to each remote CSP (e.g. by VxN number/name). At step 905, a post message is transmitted from the local CSP to each remote CSP at the network address(es) indicated by the report. Each post message comprises the virtual network routing information (e.g. VM IP/MAC) of virtual resources in a portion of a common virtual network attached to the local CSP. At step 907, a post message is received from each remote CSP attached to a common virtual network with the local CSP. The received post message(s) indicate the virtual network routing information of virtual resources attached to the remote CSP in a common virtual network with the local CSP. It should be noted that the post message of steps 905 and/or 907 may contain other information relevant to the common virtual networks. For example, router type information may be indicated via address family identifiers (AFIs) and/or subsequent address family identifiers (SAFIs), etc. Virtual network routes may be indicated by a prefix field with an address prefix followed by trailing zeros as needed to fall on an octet boundary and a MAC address field that contains a length and a MAC address (e.g. when the AFI/SAFI indicates a layer two virtual private network (L2VPN)). Upon completion of method 900, the local CSP may save the received virtual network routing information and may have obtained enough routing information to route data between virtual resources in the local portion of a virtual network to virtual resources in a remote portion of a virtual network attached to a remote CSP.

While several embodiments have been provided in the present disclosure, it may be understood that the disclosed systems and methods might be embodied in many other specific forms without departing from the scope of the appended claims. The present examples are to be considered as illustrative and not restrictive, and the intention is not to be limited to the details given herein. For example, the various elements or components may be combined or integrated in another system or certain features may be omitted, or not implemented.

In addition, techniques, systems, and methods described and illustrated in the various embodiments as discrete or separate may be combined or integrated with other systems, modules, techniques, or methods without departing from the scope of the appended claims.

Other items shown or discussed as coupled or directly coupled or communicating with each other may be indirectly coupled or communicating through some interface, device, or intermediate component whether electrically, mechanically, or otherwise.

## Claims

1. A method implemented in a network element, NE, configured to implement a cloud rendezvous point, CRP (220), the method comprising:
maintaining (801), at the CRP, a cloud switch point, CSP (210), database indicating a plurality of CSPs (210) and indicating each virtual network (230) attached to each CSP;
receiving (803) a register message from a first CSP, the register message indicating a first CSP network address and a first virtual network attached to the first CSP; and
sending (807) first report messages indicating the first CSP network address to each CSP in the CSP database attached to the first virtual network.

2. The method of claim 1, wherein the register message comprises a virtual network number for the first virtual network and a virtual network name for the first virtual network such that the first virtual network number and the first virtual network name uniquely identifies the first virtual network, and wherein the method further comprising storing the first CSP network address, the first virtual network number, and the first virtual network name in the CSP database such that the CSP database indicates the first CSP associated with the first CSP address is attached to the first virtual network in identified by the first virtual network number and the first virtual network name.

3. The method of claim 1, wherein the first report messages further indicate network addresses for each CSP in the CSP database attached to the first virtual network, and where at least one of the first report messages is sent to the first CSP.

4. The method of claim 3, wherein the register message further comprises a second virtual network attached to the first CSP, and wherein the method further comprises:
sending second report messages indicating the first CSP network address to each CSP in the CSP database attached to the second virtual network.

5. The method of claim 4, wherein the second report messages further indicate network addresses for each CSP in the CSP database attached to the second virtual network, and where at least one of the second report messages is sent to the first CSP.

6. The method of claim 5, wherein the first report messages are sent only to CSPs attached to the first virtual network, and wherein the second report messages are sent only to CSPs attached to a second network such that each CSP is only sent CSP network addresses of CSPs attached to common virtual networks.

7. The method of claim 1, wherein the register message and the first report messages are communicated via Transmission Control Protocol, TCP, connections between the CRP and the CSPs over an Internet Protocol, IP, network.

8. The method of claim 7, further comprising sending an acknowledgment message to the first CSP in response to the register message to indicate registration status of the first CSP, wherein registration status of the first CSP is indicated in a route state code in the first report messages.

9. A method implemented in a network element, NE, configured to implement a local cloud switch point, CSP (210), the method comprising:
sending, to a cloud rendezvous point, CRP (220), a register message indicating a network address of the local CSP and an indication of each virtual network (230) attached to the local CSP;
receiving from the CRP a report message indicating a remote network address of each remote CSP (210) attached to one or more common virtual networks (230) with the local CSP; and
transmitting one or more route messages to the remote CSPs at the remote network addresses to indicate local virtual routing information of portions of the common virtual networks attached to the local CSP.

10. The method of claim 9, wherein the network address of the local CSP is an internet protocol, IP, address, and wherein the indication of each virtual network attached to the local CSP comprises a virtual network name and a virtual network number for each virtual network attached to the local CSP.

11. The method of claim 9, further comprising receiving one or more route messages from the remote CSPs, the received route messages indicating remote routing information of portions of the common virtual networks attached to the remote CSPs.

12. The method of claim 11, wherein the remote routing information received from the remote CSPs comprises virtual internet protocol, IP, addresses and virtual media access control, MAC, addresses of virtual machines implemented in remote data centers attached to the remote CSPs.

13. The method of claim 9, wherein the local virtual routing information transmitted to the remote CSPs comprises virtual IP addresses and virtual MAC addresses of virtual machines implemented in a local data center attached to the local CSP.

14. A network element, NE, configured to implement a local cloud switch point, CSP, the NE comprising:
a transmitter configured to transmit, to a cloud rendezvous point, CRP, a register message indicating a network address of the local CSP and an indication of a virtual network attached to the local CSP;
a receiver configured to receive from the CRP a report message indicating a remote network address of each remote CSP attached to the virtual network; and
a processor coupled to the transmitter and the receiver, the processor configured to cause the transmitter to transmit route messages to the remote CSPs at the remote network addresses to indicate local virtual routing information of local portions of the virtual network attached to the local CSP.

15. The NE of claim 14, further comprising a memory coupled to the processor, wherein the receiver is further configured to receive the route messages from the remote CSPs, the received route messages indicating remote routing information of remote portions of the virtual network attached to the remote CSPs, and wherein the processor is further configured to store the received remote routing information to support routing of network traffic from the local portions of the virtual network to the remote portions of the virtual network via the remote CSPs.

16. The NE of claim 14 or 15, wherein the virtual network is virtual extensible network, VxN, and wherein the indication of the virtual network transmitted to the CRP comprises:
a VxN number that identifies the VxN in a CloudCasting Control, CCC domain, the CCC domain being the domain controlled by a single CRP via a CCC protocol; and
a VxN name that globally uniquely identifies the virtual network.

17. The NE of any one of claims 14 to 16, wherein the register and report messages are communicated with the CRP via a Transmission Control Protocol, TCP, session between the local CSP and the CRP, and wherein each of the route messages is transmitted to the remote CSPs via a TCP session between the local CSP and a corresponding remote CSP.

## Patentansprüche

1. Verfahren, das in einem Netzwerkelement, NE, implementiert wird, das ausgelegt ist, einen Cloud-Rendezvous-Punkt, CRP (220), zu implementieren, wobei das Verfahren umfasst:
Pflegen (801), an dem CRP, einer Cloud-Schaltpunkt-, CSP- (210), Datenbank, die eine Mehrzahl von CSPs (210) anzeigt und jedes an jeden CSP angebundene virtuelle Netzwerk (230) anzeigt;
Empfangen (803) einer Registernachricht von einem ersten CSP, wobei die Registernachricht eine erste CSP-Netzwerkadresse und ein an den ersten CSP angebundenes erstes virtuelles Netzwerk anzeigt; und
Senden (807) von ersten Berichtsnachrichten, die die erste CSP-Netzwerkadresse anzeigen, an jeden CSP in der CSP-Datenbank, der an das erste virtuelle Netzwerk angebunden ist.

2. Verfahren nach Anspruch 1, wobei die Registernachricht eine virtuelle Netzwerknummer für das erste virtuelle Netzwerk und einen virtuellen Netzwerknamen für das erste virtuelle Netzwerk umfasst, sodass die erste virtuelle Netzwerknummer und der erste virtuelle Netzwerkname das erste virtuelle Netzwerk eindeutig identifizieren, und wobei das Verfahren ferner Speichern der ersten CSP-Netzwerkadresse, der ersten virtuellen Netzwerknummer und des ersten virtuellen Netzwerknamens in der CSP-Datenbank umfasst, sodass die CSP-Datenbank anzeigt, dass der mit der ersten CSP-Adresse assoziierte erste CSP an das erste virtuelle Netzwerk angebunden ist, das durch die erste virtuelle Netzwerknummer und den ersten virtuellen Netzwerknamen identifiziert ist.

3. Verfahren nach Anspruch 1, wobei die ersten Berichtsnachrichten ferner Netzwerkadressen für jeden an das erste virtuelle Netzwerk angebundenen CSP in der CSP-Datenbank anzeigen, und wobei mindestens eine der ersten Berichtsnachrichten an den ersten CSP gesendet wird.

4. Verfahren nach Anspruch 3, wobei die Registernachricht ferner ein an den ersten CSP angebundenes zweites virtuelles Netzwerk umfasst, und wobei das Verfahren ferner umfasst:
Senden von zweiten Berichtsnachrichten, die die erste CSP-Netzwerkadresse anzeigen, an jeden CSP in der CSP-Datenbank, der an das zweite virtuelle Netzwerk angebunden ist.

5. Verfahren nach Anspruch 4, wobei die zweiten Berichtsnachrichten ferner Netzwerkadressen für jeden an das zweite virtuelle Netzwerk angebundenen CSP in der CSP-Datenbank anzeigen, und wobei mindestens eine der zweiten Berichtsnachrichten an den ersten CSP gesendet wird.

6. Verfahren nach Anspruch 5, wobei die ersten Berichtsnachrichten nur an an das erste virtuelle Netzwerk angebundene CSPs gesendet werden, und wobei die zweiten Berichtsnachrichten nur an an ein zweites Netzwerk angebundene CSPs gesendet werden, sodass an jeden CSP nur CSP-Netzwerkadressen von CSPs gesendet werden, die an gemeinsame virtuelle Netzwerke angebunden sind.

7. Verfahren nach Anspruch 1, wobei die Registernachricht und die ersten Berichtsnachrichten über Übertragungssteuerungsprotokoll-, TCP-, Verbindungen zwischen dem CRP und den CSPs über ein Internetprotokoll-, IP-, Netzwerk kommuniziert werden.

8. Verfahren nach Anspruch 7, ferner umfassend Senden einer Bestätigungsnachricht an den ersten CSP in Reaktion auf die Registernachricht, um einen Registrierungsstatus des ersten CSP anzuzeigen, wobei der Registrierungsstatus des ersten CSP in einem Routenstatuscode in den ersten Berichtsnachrichten angezeigt wird.

9. Verfahren, das in einem Netzwerkelement, NE, implementiert wird, das ausgelegt ist, einen lokalen Cloud-Schaltpunkt, CSP (210), zu implementieren, wobei das Verfahren umfasst:
Senden, an einen Cloud-Rendezvous-Punkt, CRP (220), einer Registernachricht, die eine Netzwerkadresse des lokalen CSP anzeigt, und einer Anzeige jedes an den lokalen CSP angebundenen virtuellen Netzwerks (230);
Empfangen, von dem CRP, einer Berichtsnachricht, die eine entfernte Netzwerkadresse jedes entfernten CSP (210) anzeigt, der an ein oder mehrere gemeinsame virtuelle Netzwerke (230) mit dem lokalen CSP angebunden ist; und
Übertragen einer oder mehrerer Routennachrichten an die entfernten CSPs an den entfernten Netzwerkadressen, um eine lokale virtuelle Routinginformation von Abschnitten der an den lokalen CSP angebundenen gemeinsamen virtuellen Netzwerke anzuzeigen.

10. Verfahren nach Anspruch 9, wobei die Netzwerkadresse des lokalen CSP eine Internetprotokoll-, IP-, Adresse ist, und wobei die Anzeige jedes an den lokalen CSP angebundenen virtuellen Netzwerks einen virtuellen Netzwerknamen und eine virtuelle Netzwerknummer für jedes an den lokalen CSP angebundene virtuelle Netzwerk umfasst.

11. Verfahren nach Anspruch 9, ferner umfassend Empfangen einer oder mehrerer Routennachrichten von den entfernten CSPs, wobei die empfangenen Routennachrichten entfernte Routinginformation von Abschnitten der an die entfernten CSPs angebundenen gemeinsamen virtuellen Netzwerke anzeigen.

12. Verfahren nach Anspruch 11, wobei die entfernte Routinginformation, die von den entfernten CSPs empfangen wird, virtuelle Internetprotokoll-, IP-, Adressen und virtuelle Medienzugriffssteuerungs-, MAC-, Adressen von in an die entfernten CSPs angebundenen entfernten Datenzentren implementierten virtuellen Maschinen umfasst.

13. Verfahren nach Anspruch 9, wobei die an die entfernten CSPs übertragene lokale virtuelle Routinginformation virtuelle IP-Adressen und virtuelle MAC-Adressen von in einem an den lokalen CSP angebundenen lokalen Datenzentrum implementierten virtuellen Maschinen umfasst.

14. Netzwerkelement, NE, das ausgelegt ist, einen lokalen Cloud-Schaltpunkt, CSP, zu implementieren, wobei das NE umfasst:
einen Übertrager, der ausgelegt ist, an einen Cloud-Rendezvous-Punkt, CRP, eine Registernachricht, die eine Netzwerkadresse des lokalen CSP anzeigt, und eine Anzeige eines an den lokalen CSP angebundenen virtuellen Netzwerks zu übertragen;
einen Empfänger, der ausgelegt ist, von dem CRP eine Berichtsnachricht zu empfangen, die eine entfernte Netzwerkadresse jedes an das virtuelle Netzwerk angebundenen entfernten CSP anzeigt; und
einen Prozessor, der mit dem Übertrager und dem Empfänger gekoppelt ist, wobei der Prozessor ausgelegt ist, den Übertrager zu veranlassen, Routennachrichten an die entfernten CSPs an den entfernten Netzwerkadressen zu übertragen, um eine lokale virtuelle Routinginformation von lokalen Abschnitten der an den lokalen CSP angebundenen virtuellen Netzwerke anzuzeigen.

15. NE nach Anspruch 14, ferner umfassend einen mit dem Prozessor gekoppelten Speicher, wobei der Empfänger ferner ausgelegt ist, die Routennachrichten von den entfernten CSPs zu empfangen, wobei die empfangenen Routennachrichten entfernte Routinginformation von entfernten Abschnitten der an die entfernten CSPs angebundenen virtuellen Netzwerke anzeigen, und wobei der Prozessor ferner ausgelegt ist, die empfangene entfernte Routinginformation zu speichern, um ein Routing von Netzwerkverkehr von den lokalen Abschnitten der virtuellen Netzwerke zu den entfernten Abschnitten der virtuellen Netzwerke über die entfernten CSPs zu unterstützen.

16. NE nach Anspruch 14 oder 15, wobei das virtuelle Netzwerk ein virtuelles erweiterbares Netzwerk, VxN, ist, und wobei die Anzeige des virtuellen Netzwerks, die an den CRP übertragen wird, umfasst:
eine VxN-Nummer, die das VxN in einer "CloudCasting"-Steuerungs-, CCC-,
Protokolldomäne identifiziert, wobei die CCC-Domäne die durch einen einzelnen CRP über ein CCC-Protokoll gesteuerte Domäne ist; und
einen VxN-Namen, der das virtuelle Netzwerk global eindeutig identifiziert.

17. NE nach einem der Ansprüche 14 bis 16, wobei die Register- und Berichtsnachrichten mit dem CRP über eine Übertragungssteuerungsprotokoll-, TCP-, Sitzung zwischen dem lokalen CSP und dem CRP kommuniziert werden, und wobei jede der Routennachrichten zu den entfernten CSPs über eine TCP-Sitzung zwischen dem lokalen CSP und einem entsprechenden entfernten CSP übertragen wird.

## Revendications

1. Procédé mis en œuvre dans un élément de réseau, NE, configuré pour mettre en œuvre un point de rendez-vous en nuage, CRP (220), le procédé comprenant :
le maintien (801), au CRP, d'une base de données de points de commutation en nuage, CSP (210) indiquant une pluralité de CSP (210) et indiquant chaque réseau virtuel (230) associé à chaque CSP ;
la réception (803) d'un message d'enregistrement depuis un premier CSP, le message d'enregistrement indiquant une première adresse de réseau CSP et un premier réseau virtuel associé au premier CSP ; et
l'envoi (807) de premiers messages de rapport indiquant la première adresse de réseau CSP à chaque CSP dans la base de données de CSP associée au premier réseau virtuel.

2. Procédé selon la revendication 1, dans lequel le message d'enregistrement comprend un numéro de réseau virtuel pour le premier réseau virtuel et un nom de réseau virtuel pour le premier réseau virtuel afin que le numéro de premier réseau virtuel et le nom de premier réseau virtuel identifient de façon unique le premier réseau virtuel, et dans lequel le procédé comprend en outre le stockage de la première adresse de réseau CSP, du numéro de premier réseau virtuel et du nom de premier réseau virtuel dans la base de données de CSP afin que la base de données de CSP indique que le premier CSP associé à la première adresse de CSP est associé au premier réseau virtuel identifié par le numéro de premier réseau virtuel et le nom de premier réseau virtuel.

3. Procédé selon la revendication 1, dans lequel les premiers messages de rapport indiquent en outre des adresses de réseau pour chaque CSP dans la base de données de CSP associée au premier réseau virtuel, et dans lequel au moins l'un des premiers messages de rapport est envoyé au premier CSP.

4. Procédé selon la revendication 3, dans lequel le message d'enregistrement comprend en outre un second réseau virtuel associé au premier CSP, et dans lequel le procédé comprend en outre :
l'envoi de seconds messages de rapport indiquant la première adresse de réseau CSP à chaque CSP dans la base de données de CSP associée au second réseau virtuel.

5. Procédé selon la revendication 4, dans lequel les seconds messages de rapport indiquent en outre des adresses de réseau pour chaque CSP dans la base de données de CSP associée au second réseau virtuel, et dans lequel au moins l'un des seconds messages de rapport est envoyé au premier CSP.

6. Procédé selon la revendication 5, dans lequel les premiers messages de rapport sont envoyés uniquement aux CSP associés au premier réseau virtuel, et dans lequel les seconds messages de rapport sont envoyés uniquement aux CSP associés à un second réseau afin que chaque CSP se voie envoyer uniquement les adresses de réseau CSP de CSP associés à des réseaux virtuels communs.

7. Procédé selon la revendication 1, dans lequel le message d'enregistrement et les premiers messages de rapport sont communiqués par des connexions de protocole de commande de transmission, TCP, entre le CRP et les CSP sur un réseau de protocole Internet, IP.

8. Procédé selon la revendication 7, comprenant en outre l'envoi d'un message d'accusé de réception au premier CSP en réponse au message d'enregistrement pour indiquer un état d'enregistrement du premier CSP, dans lequel l'état d'enregistrement du premier CSP est indiqué en code d'état d'acheminement dans les premiers messages de rapport.

9. Procédé mis en œuvre dans un élément de réseau, NE, configuré pour mettre en œuvre un point de commutation en nuage, CSP (210), local, le procédé comprenant :
l'envoi, à un point de rendez-vous en nuage, CRP (220), d'un message d'enregistrement indiquant une adresse de réseau du CSP local et une indication de chaque réseau virtuel (230) associé au CSP local ;
la réception depuis le CRP d'un message de rapport indiquant une adresse de réseau à distance de chaque CSP distant (210) associé à un ou plusieurs réseaux virtuels communs (230) avec le CSP local ; et
la transmission d'un ou plusieurs messages d'acheminement aux CSP distants aux adresses de réseau à distance pour indiquer des informations d'acheminement virtuel local de parties des réseaux virtuels communs associés au CSP local.

10. Procédé selon la revendication 9, dans lequel l'adresse de réseau du CSP local est une adresse de protocole Internet, IP, et dans lequel l'indication de chaque réseau virtuel associé au CSP local comprend un nom de réseau virtuel et un numéro de réseau virtuel pour chaque réseau virtuel associé au CSP local.

11. Procédé selon la revendication 9, comprenant en outre la réception d'un ou plusieurs messages d'acheminement depuis les CSP distants, les messages d'acheminement reçus indiquant des informations d'acheminement à distance de parties des réseaux virtuels communs associés aux CSP distants.

12. Procédé selon la revendication 11, dans lequel les informations d'acheminement à distance reçues depuis les CSP distants comprennent des adresses de protocole Internet, IP, virtuelles et des adresses de contrôle d'accès au support, MAC, virtuelles de machines virtuelles mises en œuvre dans des centres de traitement des données à distance associés aux CSP distants.

13. Procédé selon la revendication 9, dans lequel les informations d'acheminement virtuel local transmises aux CSP distants comprennent des adresses IP virtuelles et des adresses MAC virtuelles de machines virtuelles mises en œuvre dans un centre de traitement des données local associé au CSP local.

14. Élément de réseau, NE, configuré pour mettre en œuvre un point de commutation en nuage, CSP, local, le NE comprenant :
un émetteur configuré pour transmettre à un point de rendez-vous en nuage, CRP, un message d'enregistrement indiquant une adresse de réseau du CSP local et une indication d'un réseau virtuel associé au CSP local ;
un récepteur configuré pour recevoir depuis le CRP un message de rapport indiquant une adresse de réseau à distance de chaque CSP distant associé au réseau virtuel ; et
un processeur couplé à l'émetteur et au récepteur, le processeur étant configuré pour amener l'émetteur à transmettre des messages d'acheminement aux CSP distants aux adresses de réseau à distance pour indiquer des informations d'acheminement virtuel local à des parties locales du réseau virtuel associé au CSP local.

15. NE selon la revendication 14, comprenant en outre une mémoire couplée au processeur, dans lequel le récepteur est en outre configuré pour recevoir les messages d'acheminement depuis les CSP distants, les messages d'acheminement reçus indiquant des informations d'acheminement à distance de parties distantes du réseau virtuel associé aux CSP distants, et dans lequel le processeur est en outre configuré pour stocker les informations d'acheminement à distance reçues pour soutenir l'acheminement du trafic de réseau des parties locales du réseau virtuel aux parties distantes du réseau virtuel par le biais des CSP distants.

16. NE selon la revendication 14 ou 15, dans lequel le réseau virtuel est un réseau extensible virtuel, VxN, et dans lequel l'indication du réseau virtuel transmise au CRP comprend :
un numéro de VxN qui identifie le VxN dans un domaine de protocole de commande de nuage, CCC, le domaine de protocole CCC étant le domaine contrôlé par un seul CRP par le biais d'un protocole CCC ; et
un nom de VxN qui identifie de manière unique le réseau virtuel.

17. NE selon l'une quelconque des revendications 14 à 16, dans lequel les messages d'enregistrement et de rapport sont communiqués au CRP par le biais d'une session de protocole de commande de transmission, TCP, entre le CSP local et le CRP, et dans lequel chacun des messages d'acheminement est transmis aux CSP distants par le biais d'une session TCP entre le CSP local et un CSP distant correspondant.
